Europäisches Patentamt

European Patent Office

Office européen des brevets

(11) Publication number: **0 435 613 A2**

# EUROPEAN PATENT APPLICATION

(21) Application number: 90314140.6

(51) Int. Cl.5: **G06F 11/16**

(22) Date of filing: **21.12.90**

(30) Priority: **28.12.89 US 458323**

(43) Date of publication of application:
**03.07.91 Bulletin 91/27**

(84) Designated Contracting States:
**AT BE CH DE DK ES FR GB GR IT LI LU NL SE**

(71) Applicant: **SEQUA CORPORATION**
**3 University Plaza**
**Hackensack New Jersey(US)**

(72) Inventor: **Choses, Marvin**
**340 Northgate Road**
**Manchester, New Hampshire(US)**
Inventor: **White, Norman**
**163 Hitching Post Lane**
**Bedford, New Hampshire(US)**
Inventor: **Pfeil, William**
**1 Wildwood Drive**
**Bedford, New Hampshire(US)**
Inventor: **Allan, Nelson**
**106 Shore Drive**
**Nashua, New Hampshire(US)**

(74) Representative: **Skone James, Robert Edmund**
**et al**
**GILL JENNINGS & EVERY 53-64 Chancery**
**Lane**
**London WC2A 1HN(GB)**

(54) Bus interface controller with bus isolation capability for redundant system implementations.

(57) A redundant system utilizing a bus interface controller (40) in each redundant subsystem for segmenting a failed component in the subsystem from the remaining operational components in the system. Each subsystem or channel (30) is functionally divided in a sensor block (32) and a computational block (34). The bus interface controller (40) in each channel (30) interfaces the sensor block (32) and processing block (34) of that channel and coordinates the transfer of sensor information and cross-channel information to and from the computational block (34). In the event of a computational block (34) failure, the bus interface controller (40) still permits the cross channel transfer of sensor information to maintain maximum redundancy. Conversely, in the event of a sensor block (32) failure, the bus interface controller (40) still permits the system to utilize the channel's processing capabilities. Failures in the bus interface controller (40) itself can be bypassed and isolated by combinatorial logic within the sensor blocks (32) and computational blocks (34).

# BUS INTERFACE CONTROLLER WITH BUS ISOLATION CAPABILITY FOR REDUNDANT SYSTEM IM-PLEMENTATIONS

The present invention relates to a redundant system for processing signals from sensors and, more specifically, to a multi-bus system utilizing a bus interface controller which partitions the system in the event of a failure to maintain maximum redundancy and hence reliability.

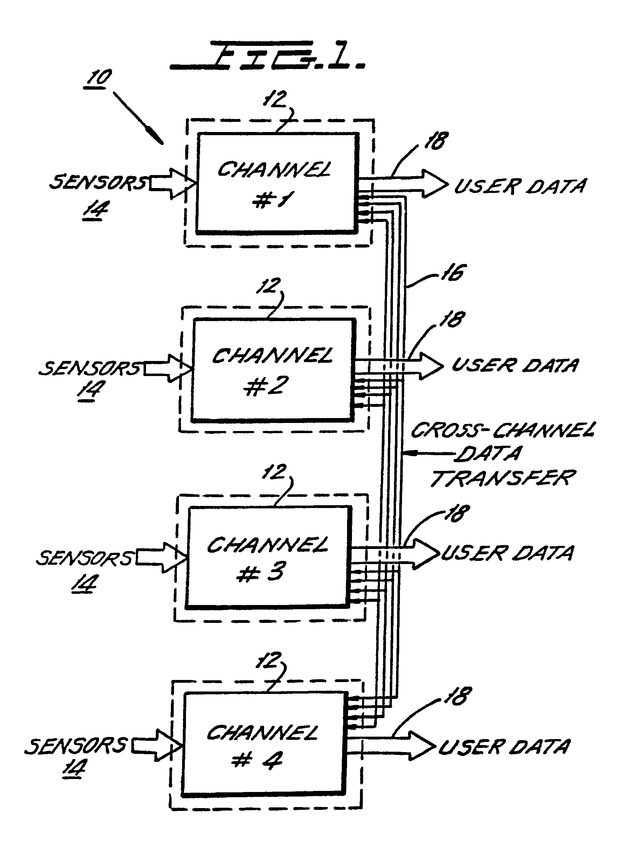

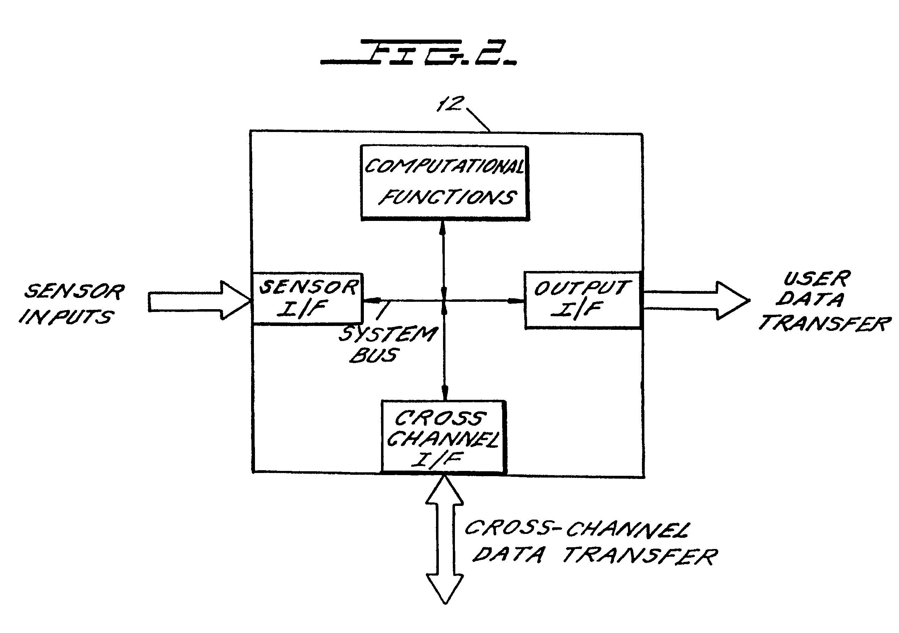

A typical prior art redundant sensor system 10 is shown in Fig. 1. System 10 as shown is quad-redundant, i.e., it is composed of four identical subsystems or channels 12. Each channel 12 processes signals received from a plurality of sensors 14 relating to various measured parameters of the external environment. Cross-channel data transfers occur over bus 16, and user specific data transfers occur over bus 18.

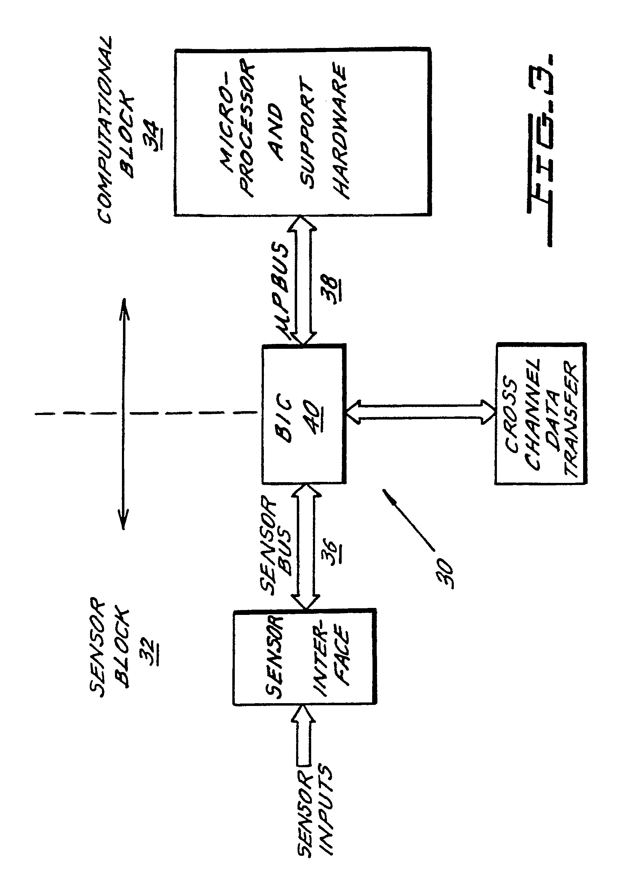

A representative functional block diagram of an individual channel 12 in the above-described prior art system is shown in Fig. 2. Each channel 12 utilizes information from its own sensors in conjunction with the redundant sensor information from other channels (obtained through cross-channel transfer) to identify and isolate individual or multiple sensor or channel faults. An individual sensor failure simply results in a loss-of-redundancy for one sensed parameter. However, a failure of a channel's processing capability results in a loss-of-redundancy for the entire sensor set of that channel. Conversely, the loss of a channel's sensor capability results in the loss of critical system information processing capability.

Accordingly, the object of present invention is to provide a multi-bus system with partitioning capability to maintain maximum redundancy and processing capability in the event of failure of a component of the system.

The present invention achieves the foregoing objective and overcomes the deficiencies of the above-described prior art system by providing a redundant system in which each channel is segmented into a sensor block and a computational block. These two blocks interface over busses to each other and to other channels through a bus interface controller (BIC). During normal channel operation, the BIC coordinates the transfer of sensor data and cross-channel data to and from the computational block. In the event of a failure of the computational block of a channel, the BIC segments the system so that cross-channel transfer is still permitted. The retention of the cross-channel transfer of sensor information in the event of computational block failure significantly enhances the level of redundancy and hence reliability of the system as compared to prior art systems. Conversely, in the event of failure of a channel's sensor block failure, the BIC still permits the utilization of the channel's processing capabilities. A failure in the BIC itself can be isolated from the system through combinational logic in the sensor and computational blocks.

Other features and advantages of the present invention will become apparent when the following description is read in conjunction with the accompanying drawings, in which:

Fig. 1 shows a typical prior art redundant system;

Fig. 2 shows a representative functional block diagram of an individual channel of the redundant system shown in Fig. 1;

Fig. 3 is a schematic block diagram of an individual channel of the system of the present invention; and

Figs. 4A-4G are block diagrams showing the individual components of the channel of Fig. 3.

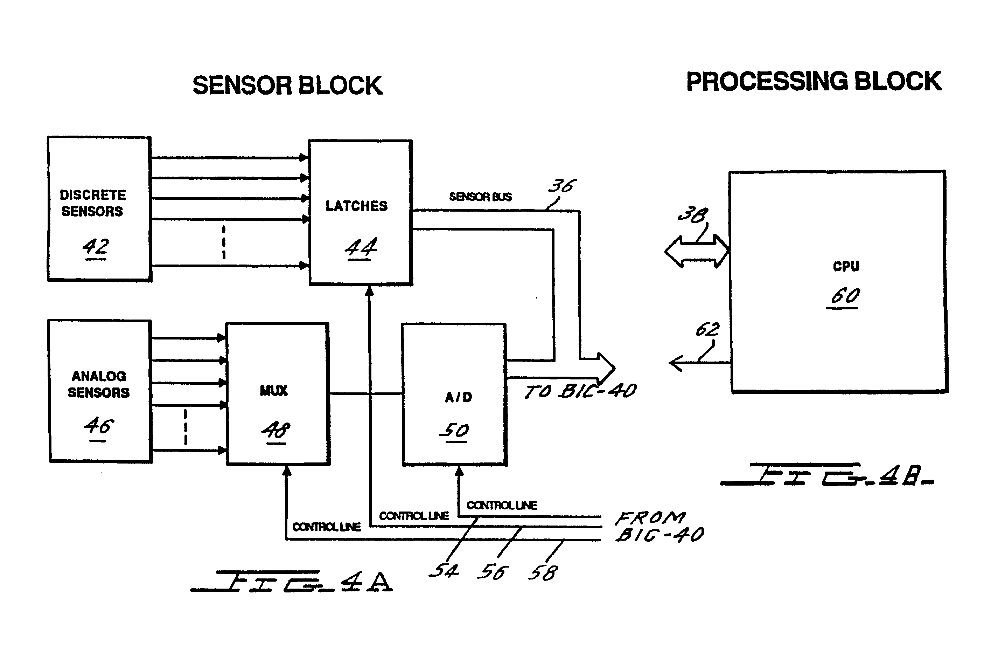

The present invention is a system comprising a number of interconnected channels. An individual channel 30 is shown in Fig. 3 in schematic block diagram form. Each channel 30 is grossly functionally segmented into a sensor block 32 and a computational block 34. Sensor block 32 and computational block 34 each have an associated bus 36, 38, respectively. The interface between the two busses 36, 38 is provided by a Bus Interface Controller (BIC) 40. During normal operation, BIC 40 coordinates the transfer of information from sensor block 32 and from other channels (termed "cross-channel information transfer") to and from computational block 34.

In the event of a failure of computational block 34, BIC 40, which effectively segments the system, still permits the cross-channel transfer of sensor information. The retention of the cross channel transfer of sensor information in the event of a computational block failure significantly enhances the level of redundancy and hence the reliability of the entire system. Conversely, in the event of sensor block failure, BIC 40 still permits the utilization of a channel's processing capabilities.

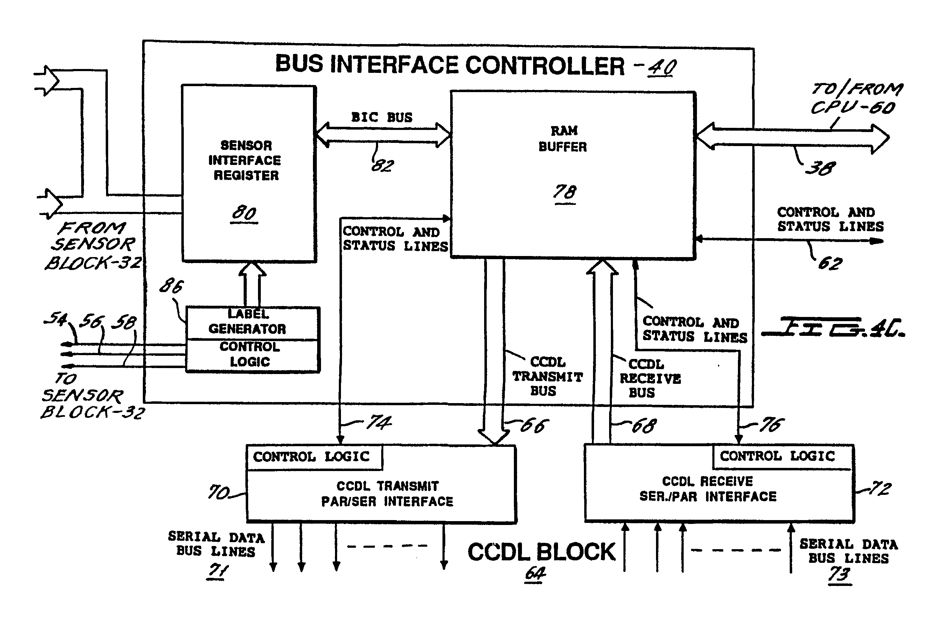

Referring now to Figs. 4A-4C, the individual components of the present invention are shown in greater detail. In Fig. 4A, sensor block 32 is shown as comprising a plurality of discrete sensors 42, which sense discrete level information relating to the external environment and convert that information into digital data. This data is sent directly to a plurality of latches 44, where it is temporarily stored. Sensor block 32 also includes a plurality of analog sensors 46, which generate analog data relating to parameters of the external environment.

The outputs of analog sensors 46 are multiplexed to form a single analog data signal in MUX 48 and then converted into digital form in A/D converter 50. The digital outputs of latches 44 and A/D converter 50 are transmitted to BIC 40 over a common sensor bus 36. BIC 40 sends signals to control the operation of latches 44, MUX 48 and A/D converter 50 via control lines 54, 56, and 58, respectively.

Fig. 4B shows the computational block of the present invention. A central processing unit (CPU) 60 performs computations on data received from sensor block 32 or other channels via BIC 40 over CPU bus 38. Data processed by CPU 60 is then sent back out to BIC 40 (again over CPU bus 38) for distribution to other channels. CPU 60 also sends control signals to BIC 40 over control and status lines 62.

Fig. 4C shows the details of BIC 40 and the cross channel data logic (CCDL) block 64. CCDL block 64 functions to convert data from parallel to serial form and vice versa, so that BIC 40 (which transmits and receives data in parallel form over busses 66, 68) can communicate with other channels over transmit serial data bus 70 and receive serial data bus 72. BIC 40 sends signals to control the operation of CCDL block 64 over control and status lines 74,76.

BIC 40 contains a RAM buffer memory 78. RAM 78 stores data from one block of the system and transfers it out to another block under control of CPU 60 and CCDL block 64. RAM 78 also stores control and status signals from CPU 60 for distribution to other components of the system. RAM 78 interfaces with sensor block 32 via a sensor interface register 80. Data from the sensors, and signals for controlling the reading of data from the sensors, pass to and from RAM 78 to sensor interface register 80 via BIC bus 82. A label generator 86 coordinates the control logic, which distributes the proper control signals on the appropriate control lines 54, 56, and 58 to latches 44, MUX 48, and A/D converter 50, respectively, and the placing of labels on the sensor data as it is latched into sensor interface register 80. Each set of sensor data is thus uniquely identifiable as to the channel from which it was obtained.

When the sensor data and its associated label is placed in RAM 78, it is addressable by that channel's CPU 60 directly through CPU bus 38 and is available to any other channel via CCDL transmit interface 70. The coordination of data transfer is accommodated by the control and status lines 74. Sensor data from other system channels is available to a channel's CPU 60 via the CCDL receive interface 72, bus 68, RAM 78 and CPU bus 38. Another channel's sensor data is uniquely decodable from RAM 78 due to the label placed on that data by the respective channel's label generator.

Control of data receipt from the CCDL interface 72 is accommodated by the control and status lines 76. The CPU 60 can receive and transmit sensor, intermediate and output computational data via bus 38, RAM 78 and CCDL block 64 independent of the operational capability of the sensor block 32. Also, the reading and transmission of sensor data from sensor block 32 is independent of the operational state of the CPU 60.

In a real-time critical application, such as a patient monitor, a plurality of sensors measure a parameter(s) of interest, each sensor set being associated with a separate channel. Each channel's CPU or processing block utilizes its own channel's sensor information and the sensor information obtained over the CCDL from other channels to determine, with high probability, the true value of the parameter being measured and to isolate sensor failures. The sensor values determined to be representative of the parameter to be measured are then processed by the computational block. Intermediate and final processed data is then compared between channels to isolate failed computational blocks.

Advantageously, the above described architecture permits partitioning of the sensor and computational blocks of the system to permit utilization of one in the event of failure of the other. The system segmentation or partitioning provided by the present invention is applicable to any redundant system with subsystems divisible into two or more major functional blocks.

## Claims

1. A redundant system comprising a plurality of channels, (12), each of the channels comprising:

   (a) sensor means (42) coupled to a first bus (36) for sensing a plurality of parameters and providing sensor information relating to the parameters on the first bus; and,

   (b) computational means (34) coupled to a second bus (38) for processing the sensor information; characterised by

   (c) bus interface means (40) for interfacing the first bus (36) and the second bus (38) and for transmitting and receiving the sensor information and the processed sensor information to and from other channels (12) in the system, the means for interfacing being capable of partitioning from the system a failed sensing means or a failed computational means of a channel to enable the channel with a failed sensing means or a failed computational means to continue to provide redundant processing capability or redundant sensor information, respectively,

**2.** A redundant system as recited in claim 1, wherein the means for interfacing comprises

(a) a sensor interface register (80) for temporarily storing: (i) the sensor information received from the first bus (36); and (ii) control information received from the computational means (34) for controlling the sensor means;

(b) a label generator and control logic (86) coupled to the sensor interface register (80) for generating sensor control signals for controlling the retrieval of the sensor information from the sensor means in accordance with the control information temporarily stored in the sensor interface register and for placing labels on the retrieved sensor information as said sensor information is latched into said sensor interface register, said labels uniquely identifying the channel from which said sensor information was obtained; and

(c) a RAM buffer memory (78) coupled to the sensor interface register (80) and the computational means (34) for storing: (i) sensor information received from the sensor interface register (80), (ii) processed sensor information received from the computational means (34), (iii) sensor information and processed sensor information from other channels (12) in the system, and (iv) control and status signals generated by the computational means within the channel and received from other channels in the system.

**3.** A redundant system as recited in claim 1 or claim 2, wherein the computational means (34) comprises a central processing unit.

**4.** A redundant system as recited in any of claims 1 to 3, wherein the sensor means (42) comprises discrete sensors for sensing the plurality of parameters and generating digital data relating thereto.

**5.** A redundant system as recited in claim 4, further comprising a plurality of latches (44) for temporarily storing the digital data from the discrete sensors, said latches being coupled to said bus interface means for transferring said digital data thereto.

**6.** A redundant system as recited in any of the preceding claims for sensing the plurality of parameters and generating analog signals relating thereto.

**7.** A redundant system as recited in claim 6, further comprising a multiplexer (48) for combining the analog signals from the analog sensors (46) to form a single analog data signal, and an A/D converter (50) coupled to the multiplexer for converting the analog data signal into digital data, the A/D converter being coupled to the bus interface (40) for transferring the digital data thereto.

**8.** A redundant system as recited in any of the preceding claims, wherein the computational means (34) generates control and status signals for controlling the sensor means (42, 46) said bus interface means (40), and the operation of other channels (12), and wherein the bus interface means transmits and receives the control and status signals to and from said other channels.

**9.** A redundant system as recited in any of the preceding claims, further comprising cross channel data logic means for converting data from the bus interface means (40) from parallel form to serial form to transmission to other channels in the system, and for converting data from other channels from serial to parallel form for reception by the bus interface means (40).

**10.** A method for maintaining optimal redundancy in a redundant system comprising a plurality of channels (12) having associated sensing means (42,46) and computational means (34), the method comprising the step of partitioning from the system a failed sensing means of a failed computational means of a channel to enable the channel with a failed sensing means or a failed computational means to continue to provide redundant processing capability or redundant sensor information, respectively, to said system.

**11.** A method as recited in claim 10, wherein said step of partitioning is performed by a bus interface means (40) in each channel (12) which interfaces the sensing means and said computational means of its respective channel to each other and to other channels.

# FIG.1.

SENSORS 14 → CHANNEL #1 → USER DATA 18

SENSORS 14 → CHANNEL #2 → USER DATA 18

CROSS-CHANNEL DATA TRANSFER 16

SENSORS 14 → CHANNEL #3 → USER DATA 18

SENSORS 14 → CHANNEL #4 → USER DATA 18

FIG.2.

SENSOR INPUTS

SENSOR I/F

COMPUTATIONAL FUNCTIONS

OUTPUT I/F

USER DATA TRANSFER

SYSTEM BUS

CROSS CHANNEL I/F

CROSS-CHANNEL DATA TRANSFER

12

FIG.3.

COMPUTATIONAL BLOCK 34

MICRO-PROCESSOR AND SUPPORT HARDWARE

μP BUS 38

BIC 40

CROSS CHANNEL DATA TRANSFER

SENSOR BUS 36

30

SENSOR BLOCK 32

SENSOR INTER-FACE

SENSOR INPUTS

# SENSOR BLOCK

# PROCESSING BLOCK

FIG. 4A

FIG. 4B

EP 0 435 613 A2

**FIG. 4C.**

BUS INTERFACE CONTROLLER - 40

TO/FROM CPU-60
38

CONTROL AND STATUS LINES
62

RAM BUFFER
78

SENSOR INTERFACE REGISTER
80

BIC BUS
82

LABEL GENERATOR CONTROL LOGIC
86

FROM SENSOR BLOCK-32

54, 56, 58

TO SENSOR BLOCK-32

CONTROL AND STATUS LINES

CONTROL AND STATUS LINES

CCDL RECEIVE BUS
68

CCDL TRANSMIT BUS
66

CONTROL LOGIC

CCDL RECEIVE SER./PAR INTERFACE
72

76

SERIAL DATA BUS LINES
73

CONTROL LOGIC

CCDL TRANSMIT PAR/SER INTERFACE
70

74

SERIAL DATA BUS LINES
71

CCDL BLOCK
64